(19) Europäisches Patentamt
European Patent Office
Office européen des brevets

(11) Veröffentlichungsnummer: **0 612 817 A1**

# (12) EUROPÄISCHE PATENTANMELDUNG

(21) Anmeldenummer: **94102042.2**

(22) Anmeldetag: **10.02.94**

(51) Int. Cl.5: **C09B 67/22**, D06P 1/38

(30) Priorität: **23.02.93 DE 4305453**

(43) Veröffentlichungstag der Anmeldung:
**31.08.94 Patentblatt 94/35**

(84) Benannte Vertragsstaaten:
**CH DE FR GB LI**

(71) Anmelder: **BAYER AG**

**D-51368 Leverkusen (DE)**

(72) Erfinder: **Hildebrand, Dietrich, Dr.**
**Wingensiefer Kamp 13**
**D-51519 Odenthal (DE)**
Erfinder: **Wolff, Joachim, Dr.**
**Schlinghovener Strasse 38**
**D-51519 Odenthal (DE)**
Erfinder: **Schulz, Rolf, Dipl.-Ing.**
**Breite Strasse 169**
**D-50667 Köln (DE)**
Erfinder: **Hoppe, Manfred, Dr.**
**Ammer Weg 23**
**D-51515 Kürten (DE)**

(54) **Reaktivfarbstoffblaumischungen mit verbesserter Metamerie.**

(57) Eine Reaktivfarbstoffblaumischung mit verbesserter Metamerie enthält wenigstens einen Vinylsulfonylphthalocyaninfarbstoff, wenigstens einen Fluor- und/oder Chlortriazinylformazanfarbstoff und gegebenenfalls einen Vinylsulfonyldisazofarbstoff.

EP 0 612 817 A1

Die Erfindung betrifft Mischungen von Reaktivblaufarbstoffen, die beim Färben von Cellulose oder Celluloseregeneratfasern eine gegenüber den Einzelkomponenten verbesserte Metamerie besitzen.

Unter Metamerie versteht man die Eigenschaft von Farbstoffen, daß damit erstellte Färbungen beim Wechsel von Beleuchtungsverhältnissen einen mehr oder weniger deutlichen Farbunterschied aufweisen. Bei Blaufarbstoffen äußert sich dies beim Übergang zu Abendlicht in einer unerwünschten Rotverschiebung. Zur quantitativen Kennzeichnung dieser unerwünschten Eigenschaft wurde der Metamerie-Index (E.I. Stearns, American Dyestuff Reporter 53, 668 (1964)) eingeführt, um beim Vergleich z.B. von Blaunuancen diejenige herauszufinden, welche die kleinste Metamerie zeigt. Bei Reaktiv-, Formazan-, Anthrachinon- und/oder Triphendioxazin-Farbstoffen auf Cellulose- und/oder Celluloseregeneratfasern führt diese Eigenschaft zu besonderen Problemen, weil Reaktivfarbstoffe auf Cellulosefasern insbesondere wegen ihrer Brillanz in anspruchsvollen hochmodischen Dessins eingesetzt werden. Ein Tonumschlag von blau nach violett einer blauen Färbung bzw. einer Kombinationsfärbung, die einen metameren Blaufarbstoff enthält, beim Wechsel von Tageslicht zur Glühlampe stellt somit eine starke Einschränkung der allgemeinen Anwendung des betreffenden Blaufarbstoffs dar. Bevorzugt sind daher sogenannte neutrale Blaufarbstoffe, welche bereits bei Tageslicht keinen Rotstich aufweisen und bei Lichtwechsel nur eine geringe Farbtonverschiebung, d.h. eine hohe Farbkonstanz zeigen.

Reaktivfarbstoffe werden in Form ihrer Einzelkomponente oder in Form von Mischungen verschiedener Farbstoffe zum Färben von Cellulosefasern verwendet. US-A-4 338 093 bezieht sich auf Mischungen von Reaktivfarbstoffen, die den selben Farbton ergeben, aber eine unterschiedliche Reaktivität aufweisen. DE-A-3 718 397 beschreibt Mischungen von Formazanreaktivfarbstoffen. US-A-5 047 067 (= EP-A-318 023) beschreibt Mischungen von Reaktivfarbstoffen mit unterschiedlicher Reaktivgruppe, unterschiedlicher Substantivität, aber etwa dem gleichen Farbton, vorzugsweise eine Mischung aus einem Anthrachinon und einem Formazan; ebenso s. JP-A 01/043 568. Gemäß EP-A-113 251 sollen Mischfasern mit einer Farbstoffmischung gefärbt werden, die einen Farbstoff mit zwei Reaktivgruppen und einen Farbstoff mit einer Reaktivgruppe aufweist. EP-A-224 224 beschreibt eine Mischung aus einem Triphendioxazin und einem Azofarbstoff mit einer Vinylsulfonylgruppierung. DE-A-4 138 084 beschreibt eine Gelbmischung aus drei Azofarbstoffen mit Vinylsulfonylgruppen EP-A-478 503 bezieht sich auf eine Mischung eines Farbstoffes mit einer Triazin- und eines Farbstoffes mit zwei Triazingruppen. Bei den Mischungen sollen die Fixiergeschwindigkeiten der Einzelkomponenten der Mischung möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe unterschiedliche Reaktivitäten und Substantivitäten und damit unterschiedliche Fixiergeschwindigkeiten, so werden sie als voneinander verschiedenen Farbstoffsortimenten zugehörig angesehen, die nach unterschiedlichen Alkali- und Temperaturbedingungen angewandt werden müssen. Eine unterschiedliche Reaktivität und Substantivität bedingt somit bei Farbstoffmischungen ein unterschiedliches Aufziehverhalten und damit nicht tongleiches Aufziehen von Farbstoffkombinationen während der Fixierung. Die Reaktivität eines Reaktivfarbstoffs wird in erster Näherung durch den chemischen Aufbau seiner Reaktivgruppe festgelegt. Jedoch besteht in jedem Fall ein starker Einfluß des jeweils vorliegenden chromophoren Systems. Dies gilt insbesondere im Fall des Phthalocyaninchromophors. Geeignete Kombinationsfarbstoffe für Phthalocyaninreaktivfarbstoffe müssen somit durch aufwendige Versuche ermittelt werden. Aufgrund des von den üblichen Reaktivfarbstoffen stark abweichenden Aufzieh-, Diffundier- und Fixierverhaltens der Reaktivphthalocyaninfarbstoffe besteht ein allgemeines Vorurteil, Phthalocyaninfarbstoffe zum Färben von Kombinationstönen außerhalb des Blau/Grünbereiches einzusetzen.

Reaktivfarbstoffe zum Färben von Cellulosefasern dienen insbesondere zum Färben von farbstarken Modetönen. Hierbei ist von besonderem Schwierigkeitsgrad die Erstellung von Färbungen hoher Egalität im Blaubereich, insbesondere im Brillantblau. Die Erstellung egaler Färbungen auf Basis eines einheitlichen Reaktivfarbstoffmoleküls ist mittels der heute im Markt befindlichen Farbstoffe mit erheblichen technischen Problemen belastet, da Cellulosefasern gegenüber den typischen Chromophoren zur Erstellung von Blaufärbungen wie Formazan, Triphendioxazin bzw. Phthalocyanin zu einer unegalen Farbstoffaufnahme neigen.

Bekannt sind zwar Blau-Mischungen aus Farbstoffen, die auf dem gleichen Chromophor beruhen, beispielsweise einem Triphendioxazinmolekül, welche sich nur durch Variation der Reaktivgruppen bzw. für den Farbton nicht relevanter Seitenketten unterscheiden, s. EP-A-485 336.

Nachteilig an den bekannten Mischungen ist aber, daß es bisher nicht gelungen ist, durch Variation eines Chromophors oder durch Variation bzw. Kombination verschiedener Reaktivfarbstoffe in einem Molekül die Metametrie von Brillantblaufärbungen zu verbessern.

Der Erfindung liegt die Aufgabe zugrunde, Reaktivfarbstoffblaumischungen zur verbesserter Erstellung tongleich aufziehender Blaufärbungen mit verringerter Metametrie, d.h. neutraler Abendfarbe bereitzustellen,

die einen gleichmäßigen Fixierverlauf zeigen. Die Farbstoffmischung sollte ein im zeitlichen Verlauf nuancenkonstantes flächenegales und reproduzierbares Färbeverhalten zeigen.

Die vorliegende Erfindung betrifft eine Reaktivfarbstoffblaumischung aus wenigstens zwei Reaktivfarbstoffen, dadurch gekennzeichnet, daß wenigstens ein Vinylsulfonylphthalocyaninfarbstoff 1, ein Fluor- und/oder Chlortriazinylformazanfarbstoff 2 und gegebenenfalls ein Vinylsulfonyldisazofarbstoff 3 enthalten ist.

Überraschenderweise zeigen die erfindungsgemäß zu verwendenden Reaktivblaufarbstoffe aus dem Bereich der Fluor- und Chlor-triazinylformazanfarbstoffe im Aufziehen und Fixieren auf Cellulosefasern, besonders bei Anwendung aus kurzen Flottenverhältnissen, ein ähnliches Verhalten wie die erfindungsgemäß zu verwendenden Phthalocyaninvinylsulfonyl-Farbstoffe.

Somit werden klare egale Blaufärbungen mit verringerter Metametrie erhalten, ohne daß das Färbegut während des Färbevorgangs eine sich verändernde Nuance durchläuft. Dadurch ist eine vorteilhafte Anwendbarkeit bei sich schwerer verlegenden Warenqualitäten und Faltenbildung in der Färbemaschine gegeben.

Die erfindungsgemäßen Farbstoffmischungen auf Basis unterschiedlicher Reaktivgruppen und unterschiedlicher Chromophore zeigen während des Fixierens eine tonkonstante Baderschöpfung ohne Auseinanderfallen der Nuance der Färbung und ohne Abhängigkeit von dem inviduelen Reaktionsverhalten der an den einzelnen Chromophoren haftenden Reaktivgruppen.

Besonders bevorzugte Farbstoffe 1 sind

1.1

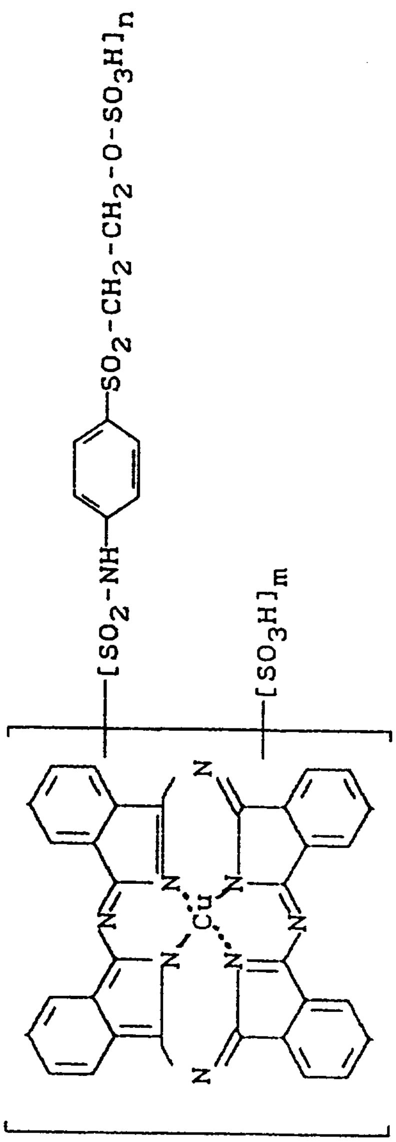

mit n = 1-3, insbesondere 1-2, speziell 1,3-1,8
m = 1-3, insbesondere 1,5-2 und
n + m = etwa 3-4

1.2

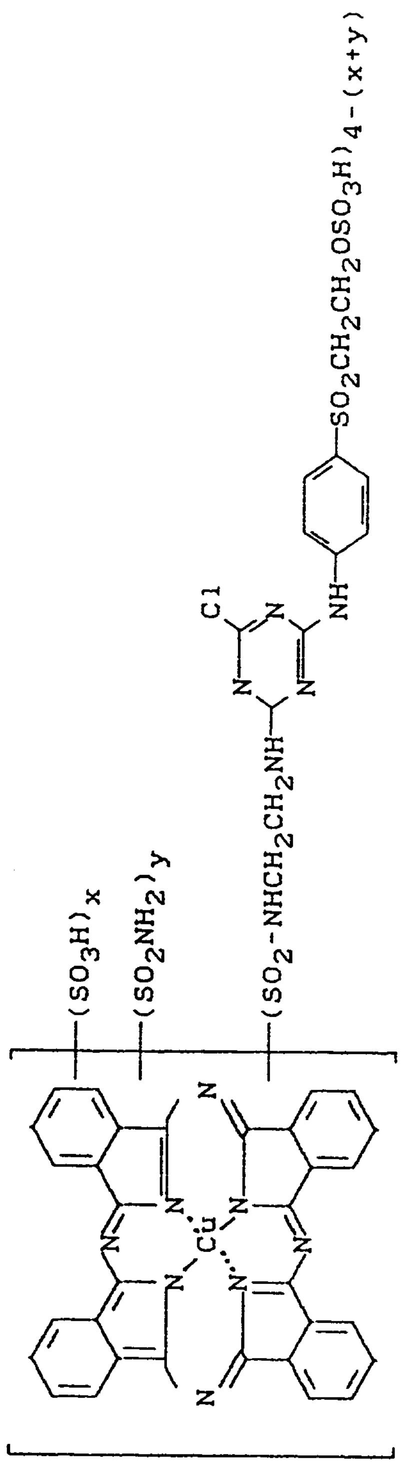

mit x = 0,8-1,5
y = 0,2-0,5
wobei n, m, x und y ungefähre Werte angeben

Besonders bevorzugte Farbstoffe 2 sind

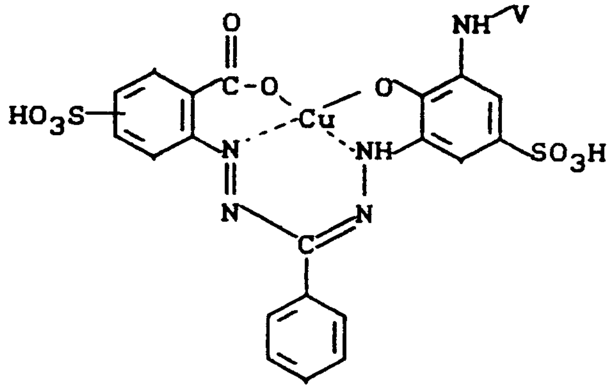

worin V bedeutet:

2.1

$V_1$ =

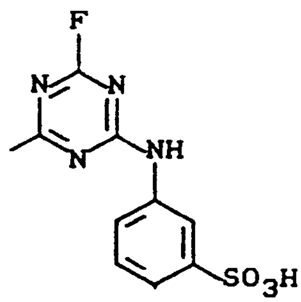

2.2

$V_2$=

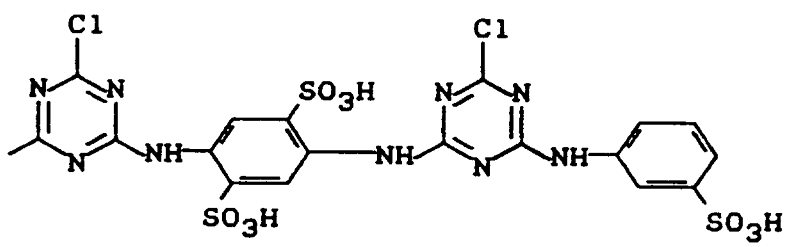

2.3

$V_3$=

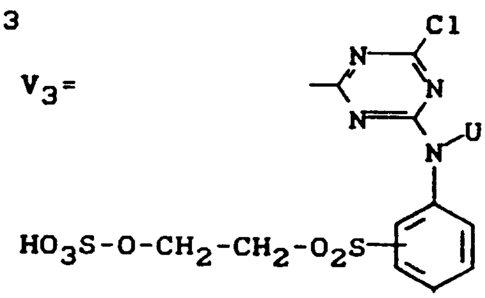

worin U = H, $CH_3$ oder $C_2H_5$ bedeutet. Besonders bevorzugte Farbstoffe 3 sind

3.1

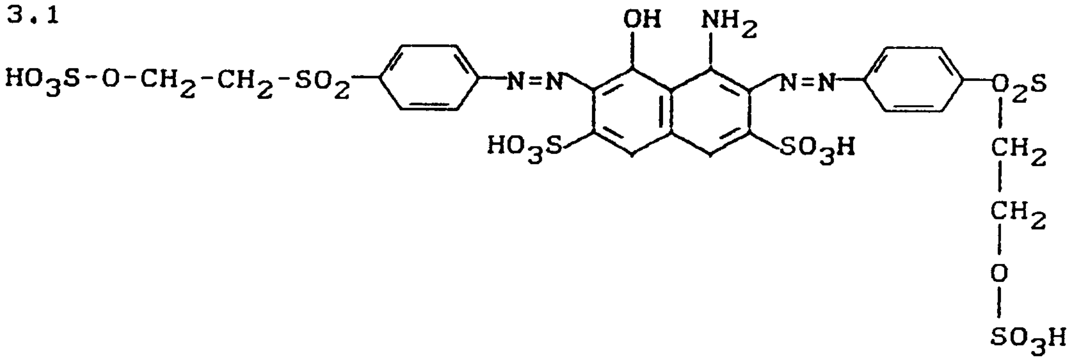

3.2

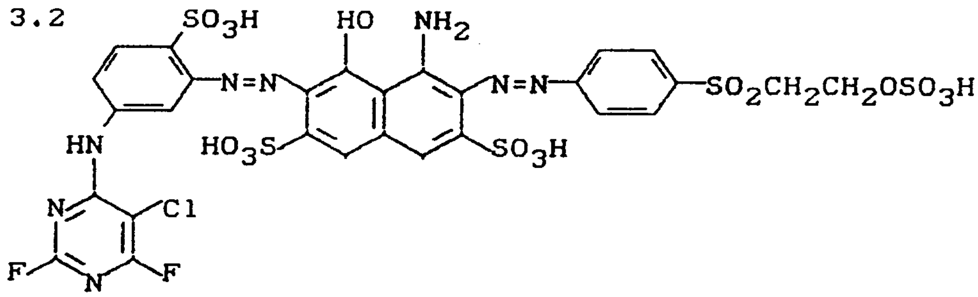

3.3

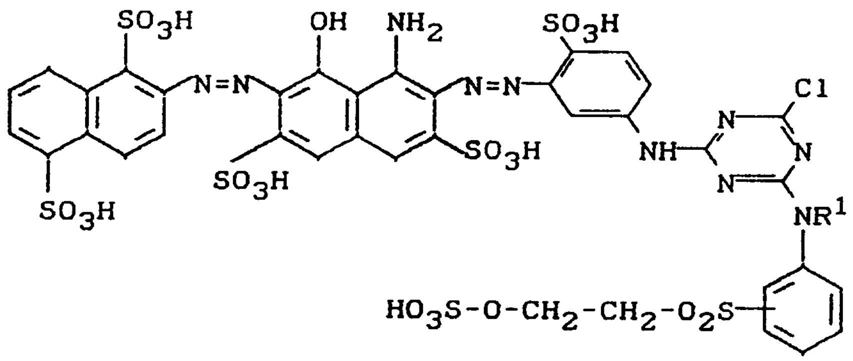

Zur besseren Handhabung enthalten die erfindungsgemäßen Mischungen vorzugsweise Dispergiermittel, insbesondere 0,5 bis 10 Gew.-Teile eine organischen, anionischen Dispergiermittels, bezogen auf die gesamte Mischung und ein Entstaubungsmittel, vorzugsweise 0,5 bis 5 Gew.-Teile, bezogen auf die gesamte Mischung.

Soweit nichts anderes angegeben, sind die im folgenden angegebenen Teile Gewichtsteile.

Besonders bevorzugte Mischungen werden im folgenden angegeben, wobei in Farbstoff 1.1 im folgenden $n = 1{,}3\text{-}1{,}8$ und $m = 1{,}5\text{-}2$: Mischung 1: Farbstoffe 1.1, 2.1
Mischung 2: Farbstoffe 1.3, 2.2
Mischung 3: Farbstoffe 1.2, 2.2 und 3.1
Mischung 4: Farbstoffe 1.1, 2.1 und 2.2
Mischung 5: Farbstoffe 1.1, 2.1, 2.2 und 3.2

In einer bevorzugten Ausführungsform enthalten die Mischungen, bezogen auf den gesamten Farbstoffgehalt:
Farbstoff 1: 10 bis 50, insbesondere 30 bis 50 Gew.-%
Farbstoff 2: 40 bis 90, insbesondere 30 bis 70 Gew.-%
Farbstoff 3: 0 bis 50, insbesondere 0 bis 40 Gew.-%
Zusätzlich können weitere Farbstoffe oder übliche Hilfsmittel eingesetzt werden. Insbesondere enthalten die erfindungsgemäßen Farbstoffmischungen pro 100 Teile Farbstoff 1 bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer mit einem Pufferungsbereich zwischen

pH 6,5 bis 7,5.

Die Farbstoffmischung kann sowohl zum Färben nach dem Auszieh-Verfahren als auch nach Klotz-Dämpf- und Kaltverweil-Verfahren verwendet werden. Geeignete Materialien sind sowohl reine Cellulosefasermaterialien als auch deren Mischungen mit Polyester wie Polyester/Baumwolle, Polyester/Viskose, Polyester/Leinen sowie Mischungen verschiedener Cellulosefasern wie Baumwolle/Zellwolle bzw. Baumwolle/Leinen. Die Haupteinsatzgebiete der Mischung sind das Färben von Baumwollweb- und Wirkware sowie Frottierware.

Die erfindungsgemäßen Mischungen eignen sich zum Färben nach dem Ausziehverfahren nach folgender Verfahrensweise:

| Zeit (Min) | Temp. (°C) | Maßnahmen |
|---|---|---|
| 10 | 60 | Farbstoffzusatz |
| 40 | 60 | Salzzusatz in Portionen (50 g/l Kochsalz) |
| 70 | 60 | Alkalizusatz (20 g/l Soda) |
| 90 | 80 | Aufheizen mit 1 °C/Minute |
| 120 | 80 | Färben |
| 130 | 50 | Warm Spülen |
| 140 | 50 | Ablassen und Auffüllen |
| 150 | 50 | Warm Spülen |
| 160 | 50 | Ablassen und Auffüllen |
| 170 | 80 | Heiß Spülen |
| 180 | 80 | Ablassen und Auffüllen |
| 190 | 80 | Heiß Spülen |
| 200 | 80 | Ablassen und Auffüllen |
| 215 | 95 | Heiß Spülen |
| 220 | 95 | Warm Spülen im Überlauf |
| 225 | 80 | Warm Spülen im Überlauf |
| 230 | 20 | Kalt Spülen |
| 240 | 20 | Färbegut entnehmen. |

Die erfindungsgemäßen Mischungen eignen sich zum Färben nach Klotzverfahren vorzugsweise nach folgenden Richtrezepturen:

A) Kaltverweil-Verfahren

Richtrezeptur:

1) 1000 Teile Klotzflotte enthalten
1 - 80 Teile Farbstoff
50 - 100 Teile Wasserglas spez. Gew. 1,5
7,5- 15 Teile Natronlauge spez. Gew. 1,5
0 - 100 Teile Harnstoff
0 - 2 Teile Netzmittel
0 - 20 Teile Verdickungsmittel

2) 1000 Teile Klotzflotte enthalten
1 - 80 Teile Farbstoff
8 - 20 Teile Soda
1 - 12 Teile Natronlauge spez. Gew. 1,5
0 - 100 Teile Harnstoff
0 - 2 Teile Netzmittel
0 - 2 Teile Verdickungsmittel

| | |
|---|---|
| Flottenaufnahme | 50 - 120 % |
| Klotzflottentemperatur | 20 - 30 °C |
| Verweilzeit | 24 - 48 Stunden |

B) Einbad-Klotz-Dämpf-Verfahren mit Zwischentrocknen

Richtrezeptur:

1000 Teile Klotzflotte enthalten

1 - 80 Teile Farbstoff
1 - 4 Teile Netzmittel
5 - 20 Teile Verdickungsmittel
5 - 20 Teile Soda wasserfrei
0 - 100 Teile Harnstoff
3 - 5 Teile m-Nitrobenzolsulfonat
Verfahrensbedingungen:

| | |
|---|---|
| Klotzflottentemperatur | 20 - 30 °C |
| Flottenaufnahme | 50 - 70 % |
| Trocknungszeit | 1 - 2 Minuten |
| Trocknungstemperatur | 120 - 140 °C |
| Dämpftemperatur | 102 - 108 °C |
| Dämpfzeit | 1 - 8 Minuten |

C) Einbad-Klotz-Dämpf-Verfahren ohne Zwischentrocknen
Richtrezeptur:
1000 Teile Klotzflotte enthalten
1 - 80 Teile Farbstoff
1 - 4 Teile Netzmittel
10 - 20 Teile Natriumbicarbonat
oder
10 - 20 Teile Natriumbicarbonat/Soda 50/50
3 - 5 Teile m-Nitrobenzolsulfonat
Verfahrensbedingungen:

| | |
|---|---|
| Klotzflottentemperatur | 20 - 30 °C |
| Flottenaufnahme | 50 - 70 % |
| Dämpftemperatur | 102 - 108 °C |
| Dämpfzeit | 1 - 8 Minuten |

D) Zweibad-Klotz-Dämpf-Verfahren mit Zwischentrocknen
Richtrezeptur:
1000 Teile Klotzflotte enthalten
1 - 80 Teile Farbstoff
1 - 4 Teile Netzmittel
5 - 20 Teile Verdickungsmittel
Chemikalienklotzflotte:
1000 Teile Chemikalienklotzflotte enthalten
250 Teile Kochsalz
20 - 40 Teile Soda wasserfrei
und/oder
20 Teile Natronlauge des spez. Gew. 1,5
Verfahrensbedingungen:

| | |
|---|---|
| Klotzflottentemperatur | 20 - 30 °C |
| Flottenaufnahme | 50 - 70 % |
| Trocknungszeit | 1 - 2 Minuten |
| Trocknungstemperatur | 120 -140 °C |
| Flottenaufnahme im Chemikalienklotz | 30 - 40 % |
| Dämpfzeit | 1 - 8 Minuten |
| Dämpftemperatur | 102 -108 °C |

E) Zweibad-Klotz-Dämpf-Verfahren ohne Zwischentrocknung
Richtrezeptur:

1000 Teile Klotzflotte enthalten
1 - 80 Teile Farbstoff
1 - 40 Teile Netzmittel
Chemikalienklotzflotte:
1000 Teile Chemikalienklotzflotte enthalten
250 Teile Kochsalz
20 - 40 Teile Soda wasserfrei
und/oder
20 Teile Natronlauge des spez. Gew. 1,5
Verfahrensbedingungen:

| | |
|---|---|
| Klotzflottentemperatur | 20 - 30 °C |
| Flottenaufnahme | 50 - 70 % |
| Flottenaufnahme im Chemikalienklotz | 20 - 50 % |
| Dämpfzeit | 1 - 8 Minuten |
| Dämpftemperatur | 102 -108 °C |

F) Klotz-Kondensier-Verfahren
Richtrezeptur:
1000 Teile Klotzflotte enthalten
1 - 40 Teile Farbstoff
1 - 4 Teile Netzmittel
5 - 10 Teile Soda
und/oder
5 - 10 Teile Natriumbicarbonat
5 - 20 Teile Verdickungsmittel
3 - 5 Teile m-Nitrobenzolsulfonat
Verfahrensbedingungen:

| | |
|---|---|
| Klotzflottentemperatur | 20 - 30 °C |
| Flottenaufnahme | 50 - 70 % |
| Trocknungstemperatur | 120 -140 °C |
| Trocknungszeit | 1 Minute |
| Kondensiertemperatur | 140 - 160 °C |
| Kondensierzeit | 1 Minute |

Beispiel 1

100 Teile einer wässrigen Färbeflotte werden auf einer Haspelkufe bei 60 °C mit 100 Teilen einer gebleichten Baumwollwirkware und 3 Teilen einer Reaktivfarbstoffmischung versetzt. Die Mischung besteht aus 50 Teilen des Farbstoffs 1.1 und 50 Teilen des Farbstoffs 2.1.

Nachdem sich in einer Zeit von 15 Minuten die Farbstoffmischung gleichmäßig in der Flotte und auf der Baumwolle verteilt hat, werden über einen Zeitraum von 30 Minuten 50 Teile Natriumchlorid in die Färbeflotte gegeben und anschließend 10 Teile Soda im Abstand von 10 Minuten zu je 3 Portionen von je 1 Teil, 2 Teilen und 7 Teilen hinzugefügt. Anschließend wird in 30 Minuten auf 80 °C erwärmt und 30 Minuten bei dieser Temperatur behandelt. Danach wird die Flotte abgelassen, zweimal bei 60 °C und zweimal bei 80 °C gespült. Anschließend wird 15 Minuten kochend extrahiert und die Waschflotte abgelassen. Nach dem kalt Spülen erhält man eine klare Blaufärbung mit guten Echtheitseigenschaften.

Die Metamerie der erhaltenen Färbung ist geringer als die einer nach gleichem Färbschema erhaltenen Färbung, in der jeweils 3 Teile ausschließlich des Farbstoffs 1.1 bzw. Farbstoff 2.1 eingesetzt wurden.

Beispiel 2

800 Teile einer wäßrigen Färbeflotte werden auf einem handelsüblichen Jetfärbeaggregat bei 30 °C mit 100 Teilen Baumwollwirkware und 40 Teilen Natriumchlorid versetzt.

Nach 10 Minuten Behandeln bei dieser Temperatur wird in 15 Minuten auf 60 °C erwärmt und über einen Zeitraum von 45 Minuten 100 Teile einer Farbstofflösung zugesetzt bestehend aus
3 Teile einer Mischung aus
40 Teile des Farbstoffs 1.1 sowie
60 Teile des Farbstoffs 2.1.

Anschließend wird über einen Zeitraum von 45 Minuten 10 Teile Soda wasserfrei gelöst in 100 Teilen Wasser zugegeben. Nach 15 Minuten wird in 20 Minuten auf 80 °C erwärmt und 30 Minuten bei dieser Temperatur behandelt.

Danach wird die Flotte abgelassen, zweimal bei 60 °C und zweimal bei 80 °C gespült. Anschließend wird 15 Minuten kochend geseift und die Waschflotte abgelassen. Nach dem kalt Spülen erhält man eine klare Blaufärbung mit verbesserten Metamerieeigenschaften.

Beispiel 3

100 Teile einer gebleichten Baumwollmaschenware werden auf einem handelsüblichen Jetfärbeaggregat mit 800 Teilen einer 60 °C warmen Färbeflotte behandelt, welche
40 Teile Natriumchlorid
20 Teile Soda (wasserfrei)
4 Teile der Farbstoffmischung bestehend aus
50 Teile des Farbstoffs 1.1
25 Teile des Farbstoffs 2.1 und
25 Teile des Farbstoffs 2.2
enthält.

Das Bad wird in 20 Minuten auf 80 °C erwärmt und 60 Minuten bei dieser Temperatur gehalten. Nach dieser Zeit wird die Flotte abgelassen und zweimal je 10 Minuten mit 800 Teilen einer 60 °C warmen Flotte und zweimal mit 800 Teilen einer 80 °C warmen Flotte gespült.

Anschließend wird mit frischer Flotte auf 95 °C erwärmt und 20 Minuten kochend extrahiert. Nach Ablassen der Waschflotte wird kalt gespült.

Man erhält eine egale Blaufärbung mit verbesserten Metamerieeigenschaften.

Beispiel 4

100 Teile einer gebleichten Baumwollwebware werden auf einem handelsüblichen Kurzflottenjetfärbeaggregat mit 500 Teilen einer 60 °C warmen Färbeflotte behandelt, welche
30 Teile Natriumsulfat (wasserfrei)
10 Teile der Farbstoffmischung bestehend aus
50 Teile des Farbstoffs 1.1
50 Teile des Farbstoffs 2.1 sowie
0,5 Teile des Farbstoffs der Formel

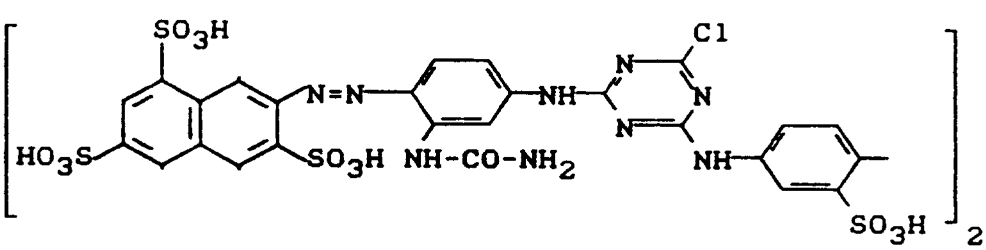

und
0,5 Teile des Farbstoffs der Formel

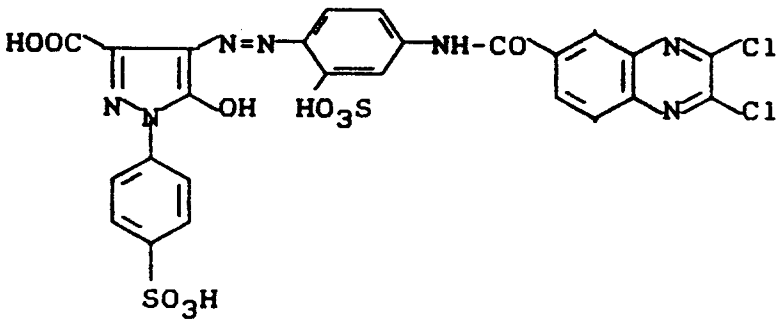

enthält.

Das Bad wird in 20 Minuten auf 80 ° C erwärmt und 60 Minuten bei dieser Temperatur gehalten. Nach dieser Zeit wird die Flotte abgelassen und zweimal je 10 Minuten mit 800 Teilen einer 60 ° C warmen Flotte und zweimal mit 800 Teilen einer 80 ° C warmen Flotte gespült.

Anschließend wird mit frischer Flotte auf 95 ° C erwärmt und 20 Minuten kochend extrahiert. Nach Ablassen der Waschflotte wird kalt gespült.

Man erhält eine egale Grünfärbung mit guten Echtheitseigenschaften.

Beispiel 5

100 Teile eines gebleichten Baumwollgarnes werden auf einem handelsüblichen Garnfärbeapparat bei einer Flottenumwälzung von 27 l/kg/Minute mit 750 Teilen einer 60 ° C warmen Färbeflotte behandelt, welche
40 Teile Natriumsulfat (wasserfrei)
10 Teile Soda (wasserfrei)
5 Teile einer Farbstoffmischung bestehend aus
30 Teilen des Farbstoffs 1.2
30 Teilen des Farbstoffs 2.1
sowie
40 Teilen des Farbstoffs 3.2
enthält.

Das Bad wird in 20 Minuten auf 80 ° C erwärmt und 60 Minuten bei dieser Temperatur gehalten. Nach dieser Zeit wird die Flotte abgelassen und zweimal mit 750 Teilen einer 60 ° C warmen Flotte gespült. Danach wird mit 750 Teilen einer 60 ° C warmen, frischen Flotte aufgefüllt und 0,5 Teile einer 60%igen Essigsäure zugesetzt und auf 80 ° C erwärmt. Nach 10 Minuten Behandeln bei dieser Temperatur wird die Flotte abgelassen, zweimal bei 50 ° C und zweimal bei 80 ° C gespült. Anschließend wird 15 Minuten kochend geseift und kalt gespült.

Man erhält eine tiefe Blaufärbung mit neutralen Metamerieeigenschaften.

Beispiel 6

1000 Teile einer wäßrigen Färbeflotte werden bei 60 ° C mit 100 Teilen Baumwollwirkware und einer Kombination von drei Reaktivfarbstoffmischungen versetzt:

| | |
|---|---|
| Mischung 1 bestehend aus | 40 Teilen Farbstoff der Formel 1.1 und |
| | 60 Teilen Farbstoff der Formel 2.1 |
| Mischung 2 bestehend aus | 50 Teilen Farbstoff der Formel 4 und |
| | 50 Teilen Farbstoff der Formel 5 |
| Mischung 3 bestehend aus | 50 Teilen Farbstoff der Formel 6 und |
| | 50 Teilen Farbstoff der Formel 7 |

4

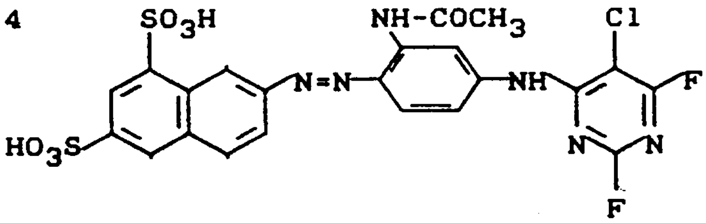

5

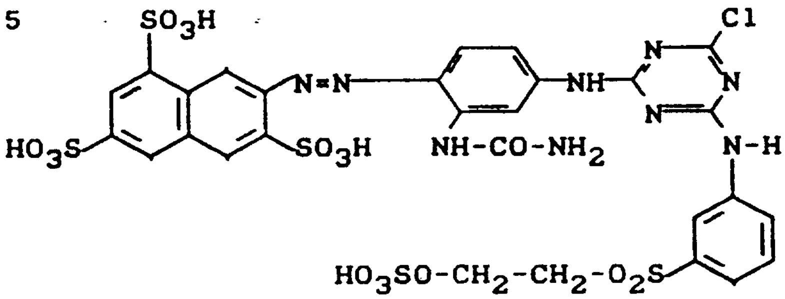

6

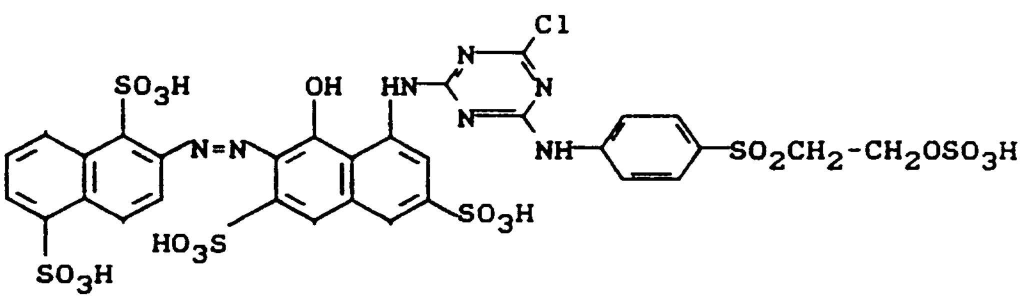

7

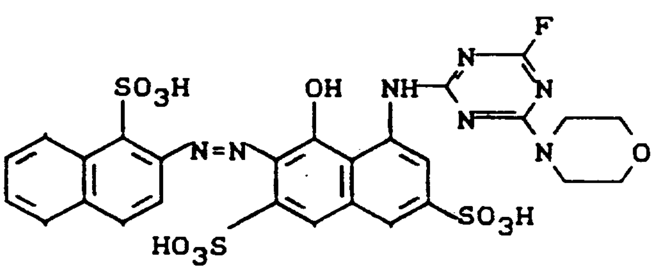

Bezogen auf 1000 Teile der Färbeflotte werden dabei eingesetzt:
Mischung 1: 0,55 Teile
Mischung 2: 0:66 Teile
Mischung 3: 0,66 Teile
Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 20 Minuten auf 80 ° C erwärmt und bei dieser Temperatur 60 Minuten belassen. Danach wird die Flotte abgelassen, zweimal bei 50 ° C und zweimal bei 80 ° C gespült. Daraufhin wird mit frischer Flotte aufgefüllt und auf 98 ° C erwärmt. Nach 10 Minuten wird abgelassen und erneut 10 Minuten bei 98 ° C behandelt, Daraufhin wird abgelassen und kalt gespült.

Man erhält eine Braunfärbung mit guten Echtheitseigenschaften.

Beispiel 7

100 Teile einer abgekochten und gebleichten Baumwollwirkware werden mit einer Flottenaufnahme von 65 % mit einer wässrigen Farbflotte imprägniert, welche in 1000 Teilen 50 Teile einer Mischung enthält, bestehend aus
25 Teilen des Farbstoffs 1.2
50 Teilen des Farbstoffs 2.2
25 Teilen des Farbstoffs 3.1
Die Imprägnierflotte enthält ferner
12 Teile Soda wasserfrei
sowie
8 Teile Natronlauge vom spez. Gew. 1,356.

Die Temperatur der Klotzflotte beträgt 25 °C.

Die mit Farbflotte imprägnierte Gewebebahn wird aufgedockt, in Polyethylenfolie eingepackt und bei langsamer Rotation 24 Stunden verweilt. Anschließend wird auf einer achtkästigen Kontinuebreitwaschmaschine nach folgendem Schema ausgewaschen:
Zweimal kalt spülen, zweimal warm spülen, zweimal kochend extrahieren, warm spülen, kalt spülen.

Man erhält eine flächenegale, endengleiche, tiefe Blaufärbung mit verbesserten Metamerieeigenschaften.

Beispiel 8

1000 Teile eines Polyesterfaser/Baumwoll-Feincordgewebes bestehend aus 80 Teilen Baumwolle und 20 Teilen Polyester werden mit einer Flottenaufnahme von 75 % mit einer wäßrigen Färbeflotte imprägniert, welche in 1000 Teilen
2 Teile eines handelsüblichen Netzmittels
30 Teile einer Farbstoffmischung bestehend aus
30 Teilen des Farbstoffs 1.1
33 Teilen des Farbstoffs 2.1
37 Teilen des Farbstoffs 2.2
10 Teile eines handelsüblichen Verdickungsmittels
sowie
3 Teile m-Nitrobenzolsulfat
gelöst enthält,
Die Temperatur der Flotte beträgt 30 °C.

Die Warenbahn wird anschließend während 1 Minute bei 120 °C getrocknet und 1 Minute bei 220 °C thermosoliert. Die Warenbahn wird daraufhin im Chemikalienklotz mit einer Fixierlösung, welche in
1000 Teilen 250 Teile Kochsalz und
20 Teile Natronlauge vom spez. Gew. 1,5
gelöst enthält, imprägniert.

Nach dem Chemikalienklotz wird in einem handelsüblichen Dämpfer 1 Minute bei 103 °C gedämpft. Nach dem wie beschrieben durchgeführten Nachwaschen und Spülen erhält man eine klare Blaufärbung mit neutraler Abendfarbe.

Beispiel 9

100 Teile einer entschlichteten und gebleichten Baumwollwebware werden mit einer Flottenaufnahme von 65 % mit einer wässrigen Farbflotte imprägniert, welche in 1000 Teilen
2 Teile eines handelsüblichen Netzmittels,
40 Teile einer Mischung bestehend aus
25 Teilen des Farbstoffs 1.1
50 Teilen des Farbstoffs 2.1
25 Teilen des Farbstoffs 3.1
50 Teile Wasserglas vom spez. Gew. 1,5
sowie
7,5 Teile Natronlauge vom spez. Gew. 1,5
gelöst enthält.

Die Temperatur der Flotte beträgt 25 °C.

Die mit Farbflotte imprägnierte Gewebebahn wird aufgedockt, mit Polyethylenfolie eingepackt und bei langsamer Rotation 24 Stunden verweilt. Anschließend wird auf einer acktkästigen Kontinuebreitwaschmaschine nach folgendem Schema ausgewaschen. Zweimal kalt spülen, zweimal warm spülen, zweimal kochend extrahieren, warm spülen, kalt spülen.

Man erhält eine egale klare Blaufärbung mit verbesserter Metamerie.

Beispiel 10

1000 Teile einer entschlichteten und gebleichten Baumwollwebware werden mit einer Flottenaufnahme von 65 % mit einer wässrigen Farbflotte imprägniert, welche in 1000 Teilen
2 Teile eines handelsüblichen Netzmittels
40 Teile einer Mischung bestehend aus
20 Teilen des Farbstoffs 1.1
10 Teilen des Farbstoffs 1.3
20 Teilen des Farbstoffs 2.1
50 Teilen des Farbstoffs 3.2
100 Teilen Harnstoff
150 Teilen Wasserglas vom spez. Gew. 1,5
sowie
15 Teile Natronlauge vom spez. Gew. 1,5
gelöst enthält.

Die Temperatur der Flotte beträgt 25 °C.

Die mit Farbflotte imprägnierte Gewebebahn wird aufgedockt und bei langsamer Rotation 24 Stunden verweilt. Anschließend wird auf einer achtkästigen Kontinuebreitwaschmaschine nach folgendem Schema ausgewaschen: Zweimal kalt spülen, zweimal warm spülen, zweimal kochend extrahieren, warm spülen, kalt spülen.

Man erhält eine tiefe Blaufärbung mit verbesserter Metamerie.

**Patentansprüche**

1. Farbstoffmischung enthaltend wenigstens zwei Reaktivblaufarbstoffe, welche eine unterschiedliche Reaktivgruppe aufweisen, dadurch gekennzeichnet, daß wenigstens ein Vinylsulfonylphthalocyaninfarbstoff 1, wenigstens ein Fluor- und/oder Chlortriazinylformazanfarbstoff 2 und gegebenenfalls ein Vinylsulfonyldisazofarbstoff 3 enthalten ist.

2. Farbstoffmischung gemäß Anspruch 1, dadurch gekennzeichnet, daß als Vinylsulfonylphthalocyanin 1 wenigstens eine der folgenden Verbindungen enthalten ist:

1.1

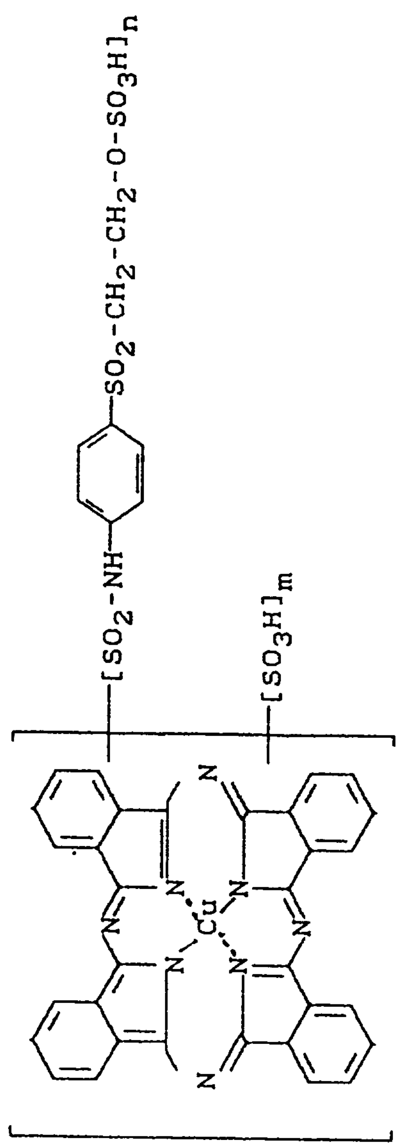

mit n = 1-3, insbesondere 1-2, speziell 1,3-1,8
m = 1-3, insbesondere 1,5-2 und
n + m = etwa 3-4

1.2

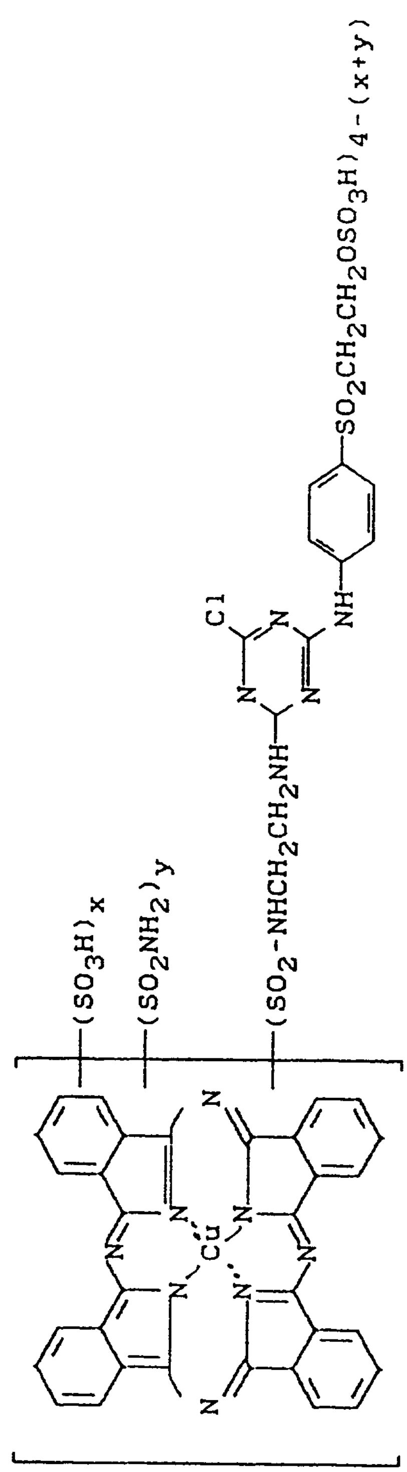

mit x = 0,8-1,5
y = 0,2-0,5
wobei n, m, x und y ungefähre Werte angeben

3. Farbstoffmischung gemäß wenigstens einem der vorhergehenden Ansprüche, dadurch gekennzeichnet, daß als Fluor- und/oder Chlortriazinylformazanfarbstoff 2 wenigstens eine der folgenden Verbindungen enthalten ist:

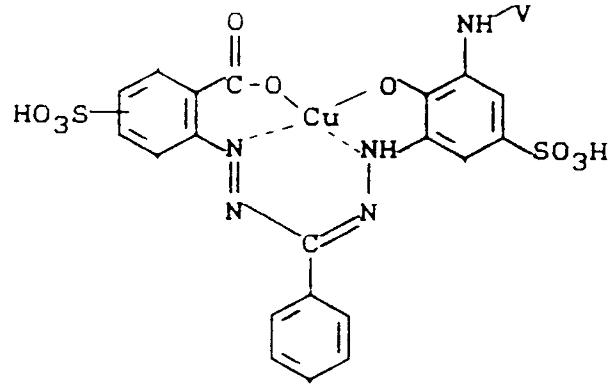

$V_1$ =

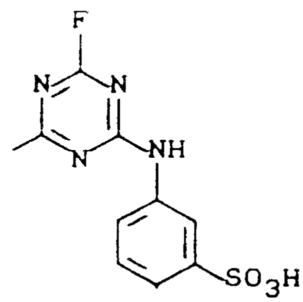

$V_2$ =

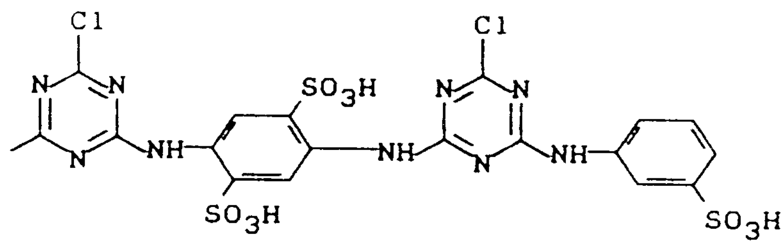

$V_3$ =

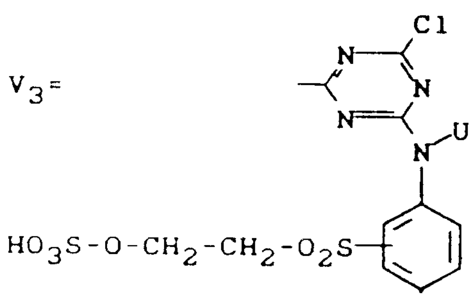

worin U = H, $CH_3$ oder $C_2H_5$ bedeutet.

**4.** Farbstoffmischung gemäß wenigstens einem der vorhergehenden Ansprüche, dadurch gekennzeichnet, daß als Vinylsulfonyldisazofarbstoff 3 eine der folgenden Verbindungen enthalten ist.

3.1

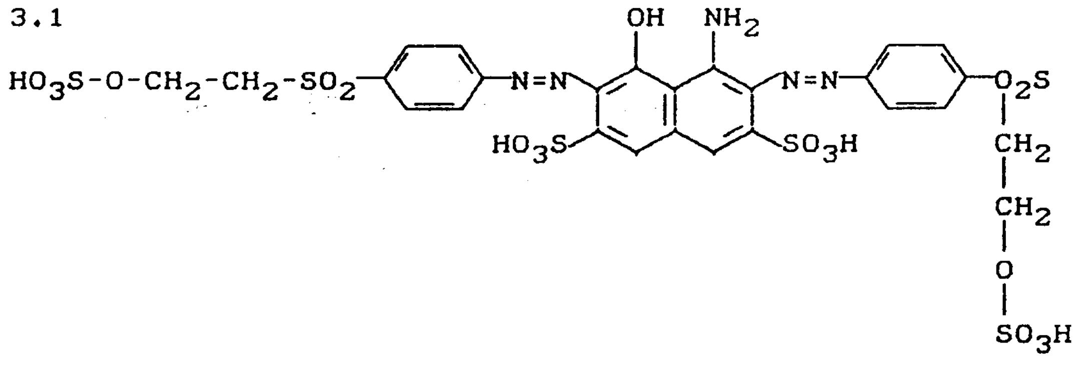

3.2

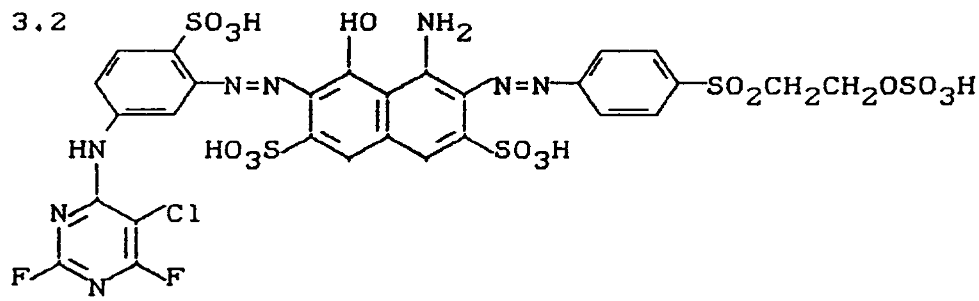

3.3

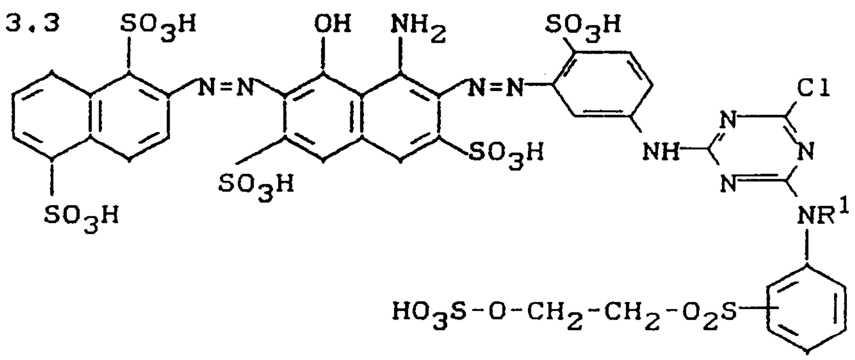

$R_1 = H, CH_3$
$C_2H_5$

**5.** Farbmischung gemäß wenigstens einem der vorhergehenden Ansprüche, dadurch gekennzeichnet, daß die Mischung 10 bis 50 Gew.-% des Farbstoffs 1, 40 bis 90 Gew.-% des Farbstoffs 2 und 0 bis 50 Gew.-% des Farbstoffs 3 bezogen auf den gesamten Farbstoffgehalt enthält.

**6.** Farbstoffmischung gemäß wenigstens einem der vorhergehenden Ansprüche, dadurch gekennzeichnet, daß pro Teile der Mischung 1 bis 50 Teile eines anorganischen Salzes und ein Puffer, der einen Pufferungsbereich zwischen pH 6,5 bis 7,5 ergibt, enthalten ist.

**7.** Farbstoffmischung gemäß wenigstens einem der vorhergehenden Ansprüche, dadurch gekennzeichnet, daß die Mischung 0,5 bis 10 Gew.-Teile eines organischen, anionischen Dispergiermittels und 0 bis 5 Gew.-Teile eines Entstaubungsmittels, jeweils bezogen auf die gesamte Mischung, enthält.

**8.** Verfahren zum Färben von Cellulosefasern und Cellulosemischfasern mit einer Mischung aus Reaktivfarbstoffen, dadurch gekennzeichnet, daß eine Mischung gemäß wenigstens einem der vorhergehenden Ansprüche verwendet wird.

**9.** Textilien, die Fasern erhalten, welche mit einer Reaktivfarbstoffmischung gemäß wenigstens einem der vorhergehenden Ansprüche gefärbt worden sind.

Europäisches Patentamt

# EUROPÄISCHER RECHERCHENBERICHT

Nummer der Anmeldung
EP 94 10 2042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 231 837 (HOECHST)<br>* Zusammenfassung; Beispiele *<br>--- | 1-9 | C09B67/22<br>D06P1/38 |
| Y<br><br><br><br>D | EP-A-0 318 023 (HOECHST JAPAN)<br>* Zusammenfassung *<br>* Seite 3, Zeile 23 - Seite 5, Zeile 9; Beispiel 7 *<br>& US-A-5 047 067 (KOICHI ET AL)<br>--- | 1-9 | |
| Y | EP-A-0 073 267 (SUMITOMO)<br>* Zusammenfassung *<br>--- | 1-9 | |
| D,A | EP-A-0 113 251 (SUMITOMO)<br>* Zusammenfassung *<br>----- | 1 | |

| RECHERCHIERTE SACHGEBIETE (Int.Cl.5) |
|---|
| C09B<br>D06P |

Der vorliegende Recherchenbericht wurde für alle Patentansprüche erstellt

| Recherchenort | Abschlußdatum der Recherche | Prüfer |
|---|---|---|
| DEN HAAG | 7. Juni 1994 | Dauksch, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)